**Europäisches Patentamt**

**European Patent Office**

**Office européen des brevets**

(19)

(11) Veröffentlichungsnummer : **0 334 215 B1**

(12)

# EUROPÄISCHE PATENTSCHRIFT

(45) Veröffentlichungstag der Patentschrift :
08.01.92 Patentblatt 92/02

(51) Int. Cl.$^5$ : **A01G 9/24, E04B 7/16**

(21) Anmeldenummer : **89104745.8**

(22) Anmeldetag : **16.03.89**

(54) Firstgelenk zwischen zwei Dachflächen von Faltschiebedächern.

(30) Priorität : **24.03.88 IT 1512488 U**

(43) Veröffentlichungstag der Anmeldung :
**27.09.89 Patentblatt 89/39**

(45) Bekanntmachung des Hinweises auf die
Patenterteilung :
**08.01.92 Patentblatt 92/02**

(84) Benannte Vertragsstaaten :
**AT BE CH DE ES FR GB GR IT LI LU NL SE**

(56) Entgegenhaltungen :
**EP-A- 0 147 502**
**EP-A- 0 217 978**
**FR-A- 1 358 634**
**FR-A- 2 272 593**

(73) Patentinhaber : **DEGOLA SERRE S.r.l.**
**Via Papa Giovanni XXIII, 88**
**I-17031 Albenga (SV) (IT)**

(72) Erfinder : **Gottardo, Fabrizio**
**Via Piemonte 34**
**I-17035 Cisano sul Neva (IT)**

(74) Vertreter : **Porsia, Bruno et al**
**c/o Succ. Ing. Fischetti & Weber Via Caffaro**
**3/2**
**I-16124 Genova (IT)**

EP 0 334 215 B1

## Beschreibung

Die Erfindung betrifft ein Firstgelenk zwischen zwei Dachflächen von Faltschiebedächern, insbesondere für Treibhäuser, Hallen und dgl. gemäss dem Oberbegriff des Anspruchs 1.

Ein solches Firstgelenk ist aus der EP-A-0217978 bekannt. Bei diesem bekannten Firstgelenk erstreckt sich die Mantelöffnung des kanalförmigen Aussenprofils über einen Zentriwinkel, der kleiner ist als 90°. Damit bei dieser Winkelgrösse die beiden aneinander angelenkten Dachflächen in ihrer zusammengefalteten Endstellung, d.h. bei geöffnetem Faltschiebedach möglichst parallel oder wenig geneigt zueinander liegen bzw. über einen möglichst grossen Winkel gegenseitig verschwenkt werden können, ist das kanalförmige Aussenprofil des bekannten Firstgelenkes an einem Gelenkzwischenstück angeformt, das durch ein anderes, gleich ausgebildetes Firstgelenk, d.h. durch ein weiteres, angeformtes, kanalförmiges Aussenprofil und ein darin drehbar formschlüssig gelagertes stabförmiges Innenprofil mit der anderen Dachfläche verbunden ist. Diese Ausbildung des Firstgelenkes ist wegen der Anordnung des Gelenkzwischenstücks und der doppelten Ausführung der Gelenkteile kompliziert und aufwendig, erfordert eine entsprechend grössere Montagearbeit und weist auch eine grössere Baubreite auf, die den Abstand zwischen den oberen Enden der beiden aneinander angelenkten Dachflächen erhöht.

Aufgabe der Erfindung ist es, diese Nachteile der bekannten Ausführung zu beheben und ein Firstgelenk gemäss dem Oberbegriff des Anspruchs 1 derart auszubilden, dass es in Verbindung mit einer bedeutend einfacheren und kostensparenden baulichen Ausbildung und einer kleineren Baubreite einen möglichst grossen Winkelbereich der gegenseitigen Verschwenkung der beiden Dachflächen bzw. eine fast parallele, d.h. nur sehr wenig zueinander geneigte Endstellung der beiden zusammengefalteten Dachflächen bei ganz geöffnetem Faltschiebedach ermöglicht und gleichzeitig eine ausreichend sichere und widerstandsfähige gegenseitige Verbindung bzw. Verankerung der beiden aneinander angelenkten Dachflächen in queraxialer Richtung in Bezug auf das Firstgelenk gewährleistet.

Diese Aufgabe wird erfindungsgemäss durch die im kennzeichnenden Teil des Anspruchs 1 angegebene Merkmalskombination gelöst.

Bei der erfindungsgemässen Ausbildung des Firstgelenkes sind also die beiden drehbar ineinandergreifenden Gelenkteile, d.h. sowohl das kanalförmige Aussenprofil als auch das darin formschlüssig drehbar gelagerte, zylinderstabförmige Innenprofil ohne Zwischenschaltung von anderen Gelenkteilen am oberen Ende je einer der beiden aneinander angelenkten Dachflächen befestigt. Um trotzdem eine möglichst weitwinklige gegenseitige Verschwenkung der beiden Dachflächen zu erreichen, bzw. bei ganz geöffnetem Faltschiebedach eine möglichst parallele d.h. möglichst wenig zueinander geneigte Stellung der beiden zusammengefalteten Dachflächen zu erzielen, ist die längsgerichtete Mantelöffnung des kanalförmigen Aussenprofils gegenüber dem Bekannten so stark erweitert, dass sie sich über einen Zentriwinkel erstreckt, der grösser als 90° ist und praktisch nur etwas kleiner als 180° sein kann. Die dadurch bedingte Schwächung bzw. Herabsetzung des Sicherheitsfaktors der gegenseitigen Verbindung der beiden aneinander angelenkten Dachflächen wird jedoch erfindungsgemäss durch einen zusätzlichen, im Querschnitt kreisbogenförmigen Verankerungsflügel aufgehoben, der von mindestens einer Seite des Verbindungsstegs des zylinderstabförmigen Innenprofils ausgeht und konzentrisch zu diesem in einem solchen radialen Abstand davon angeordnet ist, dass er zwischen sich und der äusseren Mantelfläche des kanalförmigen Innenprofils eine im Querschnitt kreisbogenförmige Aufnahmenut bildet. In diese Aufnahmenut greift der zugeordnete Wandteil des kanalförmigen Aussenprofils bei der gegenseitigen Verschwenkung der beiden Dachflächen von ihrer einen Endstellung in die andere ein. Dadurch wird eine solche zusätzliche gegenseitige queraxiale Verankerung der beiden Firstgelenkteile und infolgedessen der beiden aneinander angelenkten Dachflächen erzielt, dass trotz der einfachen baulichen Ausbildung des Firstgelenkes und seiner Zusammensetzung aus nur zwei Gelenkteilen und trotz des erzielten weiten Winkelbereichs der gegenseitigen Verschwenkbarkeit der Dachflächen, eine grösstmögliche Sicherheit gegen die Trennung der beiden Gelenkteile durch queraxial gerichtete Kräfte erreicht wird.

In vielen Anwendungsfällen ist es ausreichend, dass — in einer möglichen Ausführungsform des erfindungsgemässen Firstgelenkes — ein Verankerungsflügel nur von der oberen Seite des Verbindungsstegs des zylinderstabförmigen Innenprofils ausgeht. In dieser Ausführungsform greift das kanalförmige Aussenprofil beim Auseinanderfalten der beiden Dachflächen in die Aufnahmenut zwischen dem zylinderstabförmigen Innenprofil und dem Verankerungsflügel ein. Dadurch wird eine entsprechende zusätzliche Querverankerung der beiden Firstgelenkteile in der auseinandergefalteten Stellung der Dachflächen, d.h. bei geschlossenem Faltschiebedach erzielt.

In anderen Anwendungsfällen kann es sich als zweckmässig erweisen, die beiden Firstgelenkteile in der zusammengefalteten Stellung der Dachflächen, d.h. bei geöffnetem Faltschiebedach zusätzlich miteinander in queraxialer Richtung zu verankern. Dies wird nach einer weiteren Ausführungsform des erfindungsgemässen Firstgelenkes dadurch erzielt, dass ein Verankerungsflügel nur von der unteren Seite des Verbindungsstegs des zylinderstabförmigen Innenprofils ausgeht, wobei das kanalförmige Aussenprofil beim Zusammenfalten der beiden Dachflächen in die Aufnahmenut zwischen dem zylinderstabförmigen Innenprofil und dem Verankerungsflügel eingreift.

In einer weiteren zweckmässigen Ausführungsform des erfindungsgemässen Firstgelenkes geht ein Verankerungsflügel sowohl von der oberen als auch von der unteren Seite des Verbindungsstegs des zylinderstabförmigen Innenprofils aus, wobei das kanalförmige Aussenprofil sowohl beim Auseinanderfalten als auch beim Zusammenfalten der beiden Dachflächen mit jeweils entgegengesetzten Wandteilen in je eine der Aufnahmenuten zwischen dem zylinderstabförmigen Innenprofil und den Verankerungsflügeln eingreift und dadurch eine zusätzliche Querverankerung der beiden Firstgelenkteile sowohl in der auseinandergefalteten als auch in der zusammengefalteten Stellung der Dachflächen, d.h. sowohl bei geschlossenem als auch bei geöffnetem Faltschiebedach bewirkt.

Andere vorteilhafte Weiterbildungen des erfindungsgemässen Firstgelenkes sind in den übrigen Unteransprüchen gekennzeichnet.

Ein Ausführungsbeispiel des erfindungsgemässen Firstgelenkes für Faltschiebedächer ist in der Zeichnung dargestellt.

Fig. 1 zeigt in senkrechtem Querschnitt ein Firstgelenk zwischen zwei Dachflächen eines Faltschiebedaches in der auseinandergefalteten Endstellung der Dachflächen, d.h. bei geschlossenem Faltschiebedach.

Fig. 2 zeigt in senkrechtem Querschnitt das selbe Firstgelenk gemäss Fig. 1 in der zusammengefalteten Endstellung der Dachflächen, d.h. bei geöffnetem Faltschiebedach.

In der Zeichnung sind die oberen Enden zweier durch ein Firstgelenk miteinander verbundener Dachflächen 1 und 2 eines Faltschiebedachs dargestellt. Ein solches Faltschiebedach ist in seinem grundsätzlichen Aufbau z.B. in der EP-A-0217978 beschrieben. Die Dachflächen 1 und 2 können im Falle von Treibhäusern aus je einem Rahmen 3 bestehen, der als Dachhaut eine durchsichtige Scheibe 4 od. dgl. trägt. Selbstverständlich können jedoch als Dachhaut auch beliebige andere Werkstoffe benutzt werden. An ihrem oberen Ende schliesst jede Dachfläche 1 bzw. 2 mit einem L-förmigen Randprofil 5 ab, das eine kastenförmige Ausbuchtung 6 aufweist, in die die durchsichtige Scheibe 4 der betreffenden Dachfläche 1 bzw. 2 mit ihrem oberen Randteil zusammen mit einer Dichtungspackung 7 eingreift.

Das Firstgelenk zwischen den beiden Dachflächen 1 und 2 besteht aus einem kanalförmigen Aussenprofil 8 und einem darin drehbar gelagerten Innenprofil 9. Das kanalförmige Aussenprofil 8 weist eine im Querschnitt kreisbogenförmige Profilwand und eine längsgerichtete Mantelöffnung 208 auf.

Diese Mantelöffnung 208 erstreckt sich über einen Zentriwinkel, der grösser als 90° ist und z.B. eine Grösse von 120°-160° aufweisen kann. Das kanalförmige Aussenprofil 8 ist durch einen etwa radialen Verbindungssteg 108 mit dem unteren Eckbereich des Randprofils der zugeordneten Dachfläche 1 verbunden. Das Innenprofil 9 ist als kreiszylinderförmiges Stabprofil ausgebildet und weist einen solchen Aussendurchmesser auf, dass es formschlüssig jedoch drehbar im kanalförmigen Aussenprofil 8 gelagert werden kann. Auch das zylinderstabförmige Innenprofil 9 ist mit dem unteren Eckbereich des Randprofils 5 der zugeordneten Dachfläche 2 durch einen etwa radialen Verbindungssteg 109 verbunden, der durch die Mantelöffnung 208 des kanalförmigen Aussenprofils 8 durchgeführt ist.

Sowohl das kanalförmige Aussenprofil 8 als auch das zylinderstabförmige Innenprofil 9 des Firstgelenkes sind über ihre Verbindungsstege 108, 109 vorzugsweise einstückig mit den betreffenden Randprofilen 5 der zugeordneten Dachflächen 1 bzw. 2 ausgebildet und können z.B. als stranggepresste Profile aus Kunststoff oder Metall, insbesondere Leichtmetall bestehen. Das zylinerstabförmige Innenprofil 9 kann als Hohlprofil ausgebildet sein und in diesem Fall vorzugsweise einen längsgerichteten Schlitz 209 aufweisen, der diesem Hohlprofil 9 eine bestimmte queraxiale Elastizität verleiht.

In dem dargestellten Ausführungsbeispiel geht von der oberen Seite des Verbindungsstegs 109 des zylinderstabförmigen Innenprofils 9 ein einstückig angeformter, im Querschnitt kreisbogenförmiger, zum Innenprofil 9 konzentrischer Verankerungsflügel 10 aus, der in einem solchen radialen Abstand vom zylinderstabförmigen Innenprofil 9 verläuft, dass er zusammen mit der äusseren Mantelfläche des Innenprofils 9 eine kreisbogenförmige Aufnahmenut 11 begrenzt. Die in radialer Richtung gemessene lichte Breite dieser Aufnahmenut 11 ist gegenüber der Wandstärke des kanalförmigen Aussenprofils 8 so bemessen, dass dieses in die Aufnahmenut 11 mit möglichst geringem Bewegungsspiel, jedoch frei verschieblich eingreifen kann.

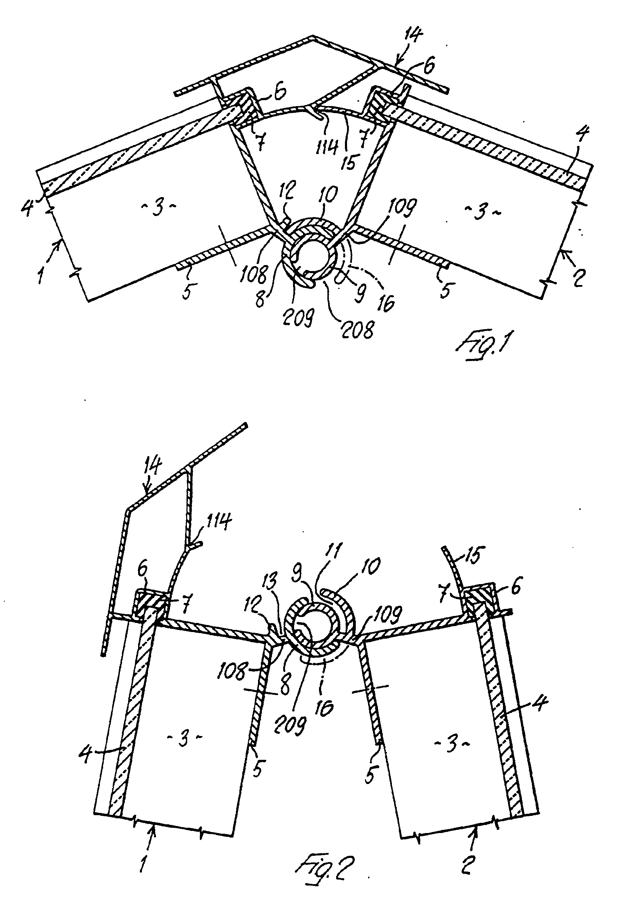

Der Verankerungsflügel 10 erstreckt sich über einen solchen Zentriwinkel, dass in der zusammengefalteten Endstellung der beiden Dachflächen 1 und 2, d.h. bei geöffnetem Faltschiebedach, das kanalförmige Aussenprofil 8 noch nicht in die vom Verankerungsflügel 10 begrenzte Aufnahmenut 11 eingreift, wie aus Fig. 2 ersichtlich ist. Diese zusammengefaltete Endstellung der Dachflächen 1 und 2 wird durch den Anschlag zwischen dem Verbindungssteg 109 des zylinderstabförmigen Innenprofils 9 und dem unteren Rand der Mantelöffnung 208 des kanalförmigen Aussenprofils 8 bestimmt. Beim Schliessen des Faltschiebedachs, d.h. beim gegenseitigen Verschwenken der Dachflächen 1 und 2 in ihre auseinandergefaltete Endstellung greift das kanalförmige Aussenprofil 8 in die vom Verankerungsflügel 10 des Innenprofils 9 gebildete Aufnahmenut 11 ein und dringt fortschreitend weiter in diese Aufnahmenut 11 ein. In der in Fig. 1 dargestellten, auseinandergefalteten Endstellung der beiden Dachflächen 1 und 2, die durch den Anschlag zwischen dem Verbindungssteg 109 des zylinderstabförmigen Innenprofils 9 und dem anderen (oberen) Rand der Mantelöffnung 208 des kanalförmigen Aussenprofils 8 bestimmt wird, liegt fast die ganze entsprechende Wandhälfte des kanalförmigen Aussenprofils 8 in der Aufnahmenut 11. Dabei kann der Verankerungsflügel 10 mit seinem freien Rand gegen den Verbindungssteg 108 des kanalförmigen Aussenprofils 8 zur Anlage kommen und/oder in eine Rastnut 13 eingreifen, die zwischen einer vom Verbindungssteg 108 des Aussenprofils 8 vorspringenden, insbesondere angeformten Rippe 12 und der Aussenseite des kanalförmigen Aussenprofils 8 selbst gebildet ist. Der Eingriff des kanalförmigen Aussenprofils 8 in die kreisbogenförmige Aufnahmenut 11 des zylinderstabförmigen Innenprofils 9 bewirkt eine zusätzliche queraxiale Verankerung der beiden Profile 8 und 9 und infolgedessen der betreffenden Teile des Firstgelenkes bzw. der zugeordneten Dachflächen 1 und 2 in ihrer auseinandergefalteten Endstellung.

Statt dem vorstehend beschriebenen, von der oberen Seite des Verbindungsstegs 109 des zylinderstabförmigen Innenprofils 9 ausgehenden Verankerungsflügel 10, oder in Verbindung mit diesem Flügel 10, kann ein ähnlich ausgebildeter Verankerungsflügel 16 von der unteren Seite des Verbindungsstegs 109 des Innenprofils 9 ausgehen. Dieser Verankerungsflügel 16 ist strichpunktiert in den Figuren 1 und 2 eingezeichnet und hat die selbe Wirkungsweise wie der vorstehend beschriebene Verankerungsflügel 10, wobei er jedoch mit der entgegengesetzten Wandhälfte des kanalförmigen Aussenprofils 8 zusammenwirkt und eine zusätzliche queraxiale Verankerung der beiden Firstgelenkteile in der zusammengefalteten Endstellung der Dachflächen 1 und 2, d.h. in der Offenstellung des Faltschiebedaches bewirkt.

Am oberen Endbereich des Randprofils 5 der einen Dachfläche 1 ist ein dachförmiges Abdeckprofil 14 befestigt, das auch einstückig mit dem Randprofil 5 ausgebildet sein kann und in der auseinandergefalteten Endstellung der beiden Dachflächen 1 und 2, d.h. bei geschlossenem Faltschiebedach die Firstlücke zwischen den beiden Dachflächen 1 und 2 überbrückt und den Randbereich der anderen Dachfläche 2 übergreift. Das Randprofil 5 der übergriffenen Dachfläche 2 kann eine vorspringende, insbesondere einstückig angeformte Dichtleiste 15 aufweisen, die in der auseinandergefalteten Endstellung der beiden Dachflächen 1 und 2 (Schliesstellung des Faltschiebedaches) in eine zugeordnete Rastnut 114 des dachförmigen Abdeckprofils 14 der anderen Dachfläche 1 eingreift, wie insbesondere in Fig. 1 dargestellt ist.

## Patentansprüche

1. Firstgelenk zwischen zwei Dachflächen (1, 2) von Faltschiebedächern, insbesondere für Treibhäuser, Hallen und dgl., bei dem der eine Gelenkteil aus einem kanalförmigen Aussenprofil (8) mit im Querschnitt kreisbogenförmiger Profilwand und längsgerichteter, sich über einen Zentriwinkel von weniger als 180° erstreckender Mantelöffnung (208), und der andere Gelenkteil aus einem zylinderstabförmigen, drehbar formschlüssig im Aussenprofil (8) gelagerten Innenprofil (9) bestehen, wobei sich die beiden Profile (8, 9) parallel zum First zwischen den beiden Dachflächen (1, 2) erstrecken und das Innenprofil (9) durch einen etwa radial gerichteten, durch die Mantelöffnung (208) des Aussenprofils (8) durchgeführten Verbindungssteg (109) mit dem oberen Ende der einen Dachfläche (2) und das Aussenprofil (8) mit dem benachbarten oberen Ende der anderen Dachfläche (1) verbindbar sind, gekennzeichnet durch die Kombination folgender Merkmale :

a) das kanalförmige Aussenprofil (8) ist durch einen etwa radial gerichteten Verbindungssteg (108) mit dem oberen Ende der anderen Dachfläche (1) verbindbar,

b) die Mantelöffnung (208) des kanalförmigen Aussenprofils (8) erstreckt sich über einen Zentriwinkel, der grösser als 90° ist,

c) von mindestens einer Seite des Verbindungsstegs (109) des zylinderstabförmigen Innenprofils (9) geht ein im Querschnitt kreisbogenförmiger, zum Innenprofil (9) konzentrischer Verankerungsflügel (10 ; 16) aus,

d) der Verankerungsflügel (10 ; 16) ist in einem solchen radialen Abstand vom zylinderstabförmigen Innenprofil (9) angeordnet, dass er zwischen sich und diesem Innenprofil (9) eine im Querschnitt kreisbogenförmige Aufnahmenut (11) für den Eingriff des zugeordneten Wandteils des kanalförmigen Aussenprofils (8) bei der gegenseitigen Verschwenkung der beiden Dachflächen (1, 2) von ihrer einen Endstellung in die andere bildet.

2. Firstgelenk nach Anspruch 1, dadurch gekennzeichnet, dass ein Verankerungsflügel (10) nur von der oberen Seite des Verbindungsstegs (109) des zylinderstabförmigen Innenprofils (9) ausgeht.

3. Firstgelenk nach Anspruch 1, dadurch gekennzeichnet, dass ein Verankerungsflügel (16) nur von der unteren Seite des Verbindungsstegs (109) des zylinderstabförmigen Innenprofils (9) ausgeht.

4. Firstgelenk nach Anspruch 1, dadurch gekennzeichnet, dass je ein Verankerungsflügel (10, 16) sowohl von der oberen als auch von der unteren Seite des Verbindungsstegs (109) des zylinderstabförmigen Innenprofils (9) ausgeht.

5. Firstgelenk nach einem der Ansprüche 1 bis 4, dadurch gekennzeichnet, dass in der einen Endstellung der beiden Dachflächen (1, 2) der beiden Dachflächen (1, 2) der Verankerungsflügel (10) mit seinem freien Ende in eine Rastnut (13) am Verbindungssteg (108) des kanalförmigen Aussenprofils (8) eingreift.

6. Firstgelenk nach einem der Ansprüche 1 bis 5, dadurch gekennzeichnet, dass in der einen Endstellung der beiden Dachflächen (1, 2) der Verankerungsflügel (10) mit seinem freien Ende gegen den Verbindungssteg (108) des kanalförmigen Aussenprofils (8) stösst.

7. Firstgelenk nach einem der Ansprüche 1 bis 6, dadurch gekennzeichnet, dass die zwischen dem Verankerungsflügel (10) und der Aussenseite des Innenprofils (9) gebildete, kreisbogenförmige Aufnahmenut (11) eine radiale Breite aufweist, die unter Belassung eines Bewegungsspiels etwa der Wandstärke des kanalförmigen Aussenprofils (8) entspricht.

8. Firstgelenk nach einem der Ansprüche 1 bis 7, dadurch gekennzeichnet, dass am oberen Ende der einen Dachfläche (1) ein dachförmiges Abdeckprofil (14) vorspringend befestigt ist, das bei auseinandergefalteten Dachflächen (1, 2) das obere Ende der anderen Dachfläche (2) übergreift.

9. Firstgelenk nach Anspruch 8, dadurch gekennzeichnet, dass in der auseinandergefalteten Endstellung der beiden Dachflächen (1, 2) in eine Rastnut (114) des dachförmigen Profils (14) eine an der anderen Dachfläche (2) befestigte Dichtleiste (15) eingreift.

**Claims**

1. Ridge pivot between two roof planes (1, 2) of foldable sliding roofs, in particular for greenhouses, halls and the like, wherein one part of the pivot consists of a channel-shaped outer profile (8) with a circular arc-shaped profile wall in the cross section and a longitudinal shell opening (208) extending over a central angle of less than 180°, and the other pivot part consists of a cylindrical rod-shaped inner profile (9) with a positive fit rotatably disposed in the outer profile (8) with both profiles (8, 9) extending in parallel to the pivot between both roof planes (1, 2), and the inner profile (9) being connectable by a connecting rod (109) approximately radially directed leading through the shell opening (208) of the outer profile (8) with the upper end of one roof plane (2) and the outer profile (8) being connectable with the adjacent upper end of the other roof plane (1) **characterized by** the combination of the following features :

a) the channel-shaped outer profile (8) is connectable with the upper end of the other roof plane (1) by a connecting rod (108) being approximately radially directed,

b) the shell opening (208) of the channel-shaped outer profile (8) extends over a central angle greater than 90°,

c) a tie wing (10 ; 16) with a circular arc-shaped cross section which is concentric to the inner profile (9) starts from at least one side of the connecting rod (109) of the cylindrical rod-shaped inner profile (9),

d) the tie wing (10 ; 16) is arranged at such radial distance from the cylindrical rod-shaped inner profile (9) that a receiving slot (11) circular are-shaped in the cross section is formed between the tie wing and this inner profile (9) for engagement of the corresponding wall part of the channel-shaped outer profile (8) when both roof planes (1, 2) are mutually pivoted from one end position to the other end position.

2. Ridge pivot according to claim 1, **characterized in** that one tie wing (10) starts only from the upper side of the connecting rod (109) of the cylindrical rod-shaped inner profile (9).

3. Ridge pivot according to claim 1, **characterized in** that one tie wing (16) starts only from the lower side of the connecting rod (109) of the cylindrical rod-shaped inner profile (9).

4. Ridge pivot according to claim 1, **characterized in** that one tie wing (10 ; 16), respectively, starts from the upper side, as well as from the lower side of the connecting rod (109) of the cylindrical rod-shaped inner profile (9).

5. Ridge pivot according to one of the claims 1 to 4, **characterized in** that in one end position of both roof planes (1, 2) the free end of the tie wing (10) engages in a stop slot (13) at the connecting rod (108) of the channel-shaped outer profile (8).

6. Ridge pivot according to one of claims 1 to 5, **characterized in** that in one end position of both roof planes (1, 2) the free end of the tie wing (10) abuts against the connecting rod (108) of the channel-shaped outer profile (8).

7. Ridge pivot according to one of claims 1 to 6, **characterized in** that the circular arc-shaped receiving slot (11) formed between the tie wing (10) and the outer side of the inner profile (9) has a radial width which approximately corresponds to the wall width of the channel-shaped outer profile (8) when leaving a motion clearance.

8. Ridge pivot according to one of claims 1 to 7, **characterized in** that a roof-shaped cover profile (14) is protrudingly fastened on the upper end of one roof plane (1) which overlaps the upper end of the other roof plane (2) when the roof planes (1, 2) are unfold.

9. Ridge pivot according to claim 8, **characterized in** that a sealing ledge (15) fastened to the other roof plane (2) engages in a stop slot (114) of the roof-shaped profile (14) when both roof planes (1, 2) are in the unfold end position.

## Revendications

1. Articulation de faîte, entre deux plans de toit (1, 2) de toits coulissants pliables, en particulier pour serres, halles et analogues, dans laquelle l'une des parties d'articulation se compose d'un profilé extérieur (8) en forme de canal, avec une paroi de profil à section transversale en forme d'arc de cercle et une ouverture d'enveloppe (208) orientée longitudinalement, s'étendant sur un angle au centre inférieure à 180°, et l'autre partie d'articulation se compose d'un profilé intérieur (9), en forme de barre cylindrique, monté tournant, avec ajustement de forme, dans le profilé extérieur (8), les deux profilés (8, 9) s'étendant parallèlement au faîte, entre les deux plans de toit (1, 2) et le profilé intérieur (9) étant susceptible d'être relié, grâce à une nervure de liaison (109) orientée à peu près radialement et passant dans l'ouverture d'enveloppe (208) du profilé extérieur (8), à l'extrémité supérieure d'un plan de toit (2) et le profilé extérieur (8) étant susceptible d'être relié à l'autre extrémité supérieure voisine de l'autre plan de toit (1), caractérisée par la combinaison des caractéristiques suivantes :

  a) le profilé extérieur (8) en forme de canal est susceptible d'être relié à l'extrémité supérieure de l'autre plan de toit (1), grâce à une nervure de liaison (108) orientée à peu près radialement
  b) l'ouverture d'enveloppe (208) du profilé extérieur (8) en forme de canal s'étend sur un angle au centre supérieur à 90°,
  c) une aile d'ancrage (10 ; 16), concentrique au profilé intérieur (9) et à section transversale en arc de cercle, part depuis au moins un coté de la nervure de liaison (109) du profilé intérieur (9) en forme de barre cylindrique,
  d) l'aile d'ancrage (10 ; 16) est disposée à une telle distance radiale du profilé intérieur (9) en forme de barre cylindrique qu'entre celle-ci et ce profilé intérieur (9), se forme une rainure de logement (11) à section en forme d'arc de cercle, pour l'engagement de la partie de paroi associée du profilé extérieur (8) en forme de canal, lors du pivotement mutuel des deux plans de toit (1, 2), de l'une de leurs positions finales à l'autre.

2. Articulation de faîte selon la revendication 1, caractérisée en ce qu'une aile d'ancrage (10) ne part que du côté supérieur de la nervure de liaison (109) du profilé intérieur (9) en forme de barre cylindrique.

3. Articulation de faîte selon la revendication 1, caractérisée en ce qu'une aile d'ancrage (16) ne part que du côté inférieur de la nervure de liaison (109) du profilé intérieur (9) en forme de barre cylindrique.

4. Articulation de faîte selon la revendication 1, caractérisée en ce qu'une aile d'ancrage (10, 16) part de chaque côté, tant supérieur qu'inférieur, de la nervure de liaison (109) du profilé intérieur (9) en forme de barre cylindrique.

5. Articulation de faîte selon l'une des revendications 1 à 4, caractérisée en ce que, dans l'une des positions finales des deux plans de toit (1, 2), l'aile d'ancrage (10) s'engage par son extrémité libre dans une rainure d'encliquetage (13) située sur la nervure de liaison (108) du profilé extérieur (8) en forme de canal.

6. Articulation de faîte selon l'une des revendications 1 à 5, caractérisée en ce que, dans l'une des positions finales des deux plans de toit (1, 2), l'aile d'ancrage (10) bute par son extrémité libre contre la nervure de liaison (108) du profilé extérieur (8) en forme de canal.

7. Articulation de faîte selon l'une des revendications 1 à 6, caractérisée en ce que la rainure de logement (11) en forme d'arc de cercle, qui est formée entre l'aile d'ancrage (10) et la face extérieure du profilé intérieur (9), présente une largeur radiale qui correspond à peu près à l'épaisseur de paroi du profilé extérieur (8) en forme de canal, en laissant subsister un jeu de déplacement.

8. Articulation de faîte selon l'une des revendications 1 à 7, caractérisée en ce que, sur l'extrémité supérieure d'un plan de toit (1) est fixé en saillie un profilé de recouvrement (14) qui entoure l'extrémité supérieure de l'autre plan de toit (2) lorsque les plans de toit (1, 2) sont déployés.

9. Articulation de faîte selon la revendication 8, caractérisée en ce que dans la position finale déployée des deux plans de toit (1, 2), une bande d'étanchéité (15) fixée sur l'autre plan de toit (2) s'engage dans une rainure d'encliquetage (114) du profilé en forme de toit (14).

Fig.1

Fig.2